# EUROPÄISCHE PATENTSCHRIFT

(11) **EP 0 695 504 B1**
(45) Veröffentlichungstag und Bekanntmachung des Hinweises auf die Patenterteilung: **22.09.1999**
(21) Anmeldenummer: 95110560.0
(22) Anmeldetag: 06.07.1995
(51) Int. Cl.: A21B 3/04, A47J 27/04, F24C 15/00

(54) **Backofen zum Dampfgaren**
Oven for steam cooking
Four pour cuire à la vapeur

(30) Priorität: 03.08.1994 DE 4427461
(43) Veröffentlichungstag der Anmeldung: 07.02.1996
(73) Patentinhaber: BSH Bosch und Siemens Hausgeräte GmbH, 81669 München (DE)
(72) Erfinder: Kieslinger, Michael, Dipl.-Ing., D-85354 Freising (DE)

(56) Entgegenhaltungen:
- EP-A- 0 140 841
- EP-A- 0 256 338
- DE-U- 8 631 399
- FR-A- 2 699 650

## Beschreibung

Die Erfindung betrifft einen Backofen zum Dampfgaren nach dem Oberbegriff des Anspruchs 1.

Ein derartiger Backofen ist bekannt aus der FR-A-2699650, wobei im Garraum ein plattenförmiges Einschiebeteil gehaltert ist. In diesem Einschiebeteil ist ein Dampferzeuger vorgesehen sowie nach oben und nach unten gerichtete Dampfaustrittsöffnungen. Das Einschiebeteil ist zudem in verschiedene Höhen des Garraums einschiebbar.

Ein weiterer Backofen ist bekannt aus der DE 41 16 425 A1, wobei der Garraum wenigstens zwei separate Dampfverteilungseinrichtungen bzw. Dampfzuführungen aufweist, die jeweils verschiedenen Garraum-Zonen zugeordnet sind. Die räumlich enge Ankopplung der Dampfverteilungseinrichtung zum Gargut ist insbesondere beim Garen mit überhitztem Dampf wichtig, da dabei zum Erreichen eines wirtschaftlichen Wirkungsgrades ein gezielteres Aufleiten des überhitzten Dampfes aus kurzer Entfernung auf das Gargut erforderlich ist. Nachteilig bei dieser Anordnung ist die erforderliche Anzahl unterschiedlicher Dampfverteilungseinrichtungen. Dies kompliziert und verteuert den Backofen erheblich. Weiterhin kann wegen der variablen Anordnung des Gargutes innerhalb einer Garraumzone trotz mehrerer Verdampfungseinrichtungen ein gezieltes Aufleiten des Dampfes auf das Gargut nicht immer gewährleistet werden.

Aufgabe der vorliegenden Erfindung ist es, einen Backofen zum Dampfgaren bereitzustellen, bei dem ein gezieltes Aufleiten des Dampfes auf das Gargut mit einfachen Mitteln erreicht wird.

Diese Aufgabe wird erfindungsgemäß durch die Merkmale des Anspruchs 1 gelöst. Erfindungsgemäß ist die Dampfverteilungseinrichtung also mit der Dampf-Austrittsöffnung verschwenkbar und/oder teleskopartig verschiebbar. Dadurch ist die konstruktiv einfache und stabile Ausgestaltung zum einen ohne wesentliche Einschränkung der mit Dampf direkt beaufschlagbaren Orte innerhalb des Garraums gewährleistet, und zum anderen ist durch die Verschiebbarkeit der Dampfverteilungseinrichtung die vom Dampf innerhalb der Dampfverteilungseinrichtung im Garraum zurückzulegende Strecke auf das erforderliche Mindestmaß begrenzt. Die Wärmeverluste innerhalb der von der Verdampfungseinrichtung gespeisten Dampfverteilungseinrichtung auf dem Weg zum Gargut sind somit im Vergleich zu einer flexiblen Dampfleitung, deren Länge unveränderlich ist und von einem am ungünstigsten plazierten Gargut im Garraum bestimmt wird, verringert. Es kann nahezu jeder Ort innerhalb des Garraums gezielt mit Dampf beaufschlagt werden. So ist eine Erhöhung des Wirkungsgrades bezüglich des kondensativen Wärmeübergangs auf das Gargut möglich. Da das Gargut beliebig im Garraum angeordnet werden kann, ist eine optimale Kombination mit den anderen Wärmequellen des Backofens, beispielsweise Unter- bzw. Oberhitze, aber auch Mikrowelle möglich. Weiterhin können im Garraum abgestellte Back- und Kochutensilien, wie beispielsweise Töpfe, Backblech usw., durch gezieltes Aufleiten von Dampf gereinigt werden.

Vorteilhafterweise ist die Dampfverteilungseinrichtung gemäß einer Weiterbildung im oberen Bereich des Garraums befestigt. Dies erleichtert die Beaufschlagung des Garguts mit Dampf von oben sowie die Dampfzufuhr auf ein Backblech und verringert die Verschmutzung der Dampfverteilungseinrichtung bzw. der Dampfaustrittsöffnung.

Die Dampfverteilungseinrichtung weist in einer weiteren Ausführungsform eine Schnellkupplung zur lösbaren Befestigung an einem dem Garraum Dampf zuführenden Dampfeinleitrohr auf. So ist die Dampfverteilungseinrichtung von einer Bedien- bzw. Wartungsperson einfach und schnell aus dem Garraum entnehmbar, austauschbar bzw. nachrüstbar.

Gemäß einer vorteilhaften Weiterbildung sind auf die Dampfaustrittsöffnung unterschiedliche, das Ausströmverhalten des Dampfes verändernde Strömungselemente, wie beispielsweise Düse oder Diffusor, aufsetzbar. Dadurch kann insbesondere die Strömungsgeschwindigkeit des Dampfes anwendungspezifisch in einen weiten Bereich variiert und an das jeweils vorliegende Dampfgarproblem angepaßt werden.

Gemäß einer anderen vorteilhaften Ausführungsform ist an die Dampfaustrittsöffnung über ein Verbindungsstück ein im Garraum abgestelltes, verschließbares Gargefäß ankoppelbar. Insbesondere bei hoch überhitztem Dampf mit einer Temperatur von beispielsweise 300°C kann dadurch vorteilhafterweise das relevante Volumen des Garraums stark reduziert werden.

Nachfolgend ist anhand schematischer Darstellungen ein Ausführungsbeispiel des erfindungsgemäßen Backofens beschrieben. Es zeigen:

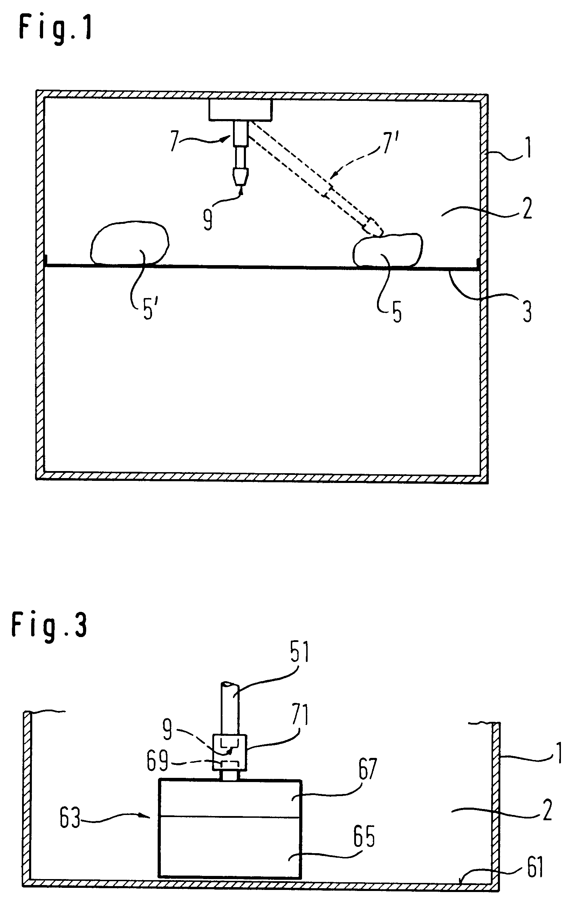

- Fig. 1: in einer Querschnitt-Darstellung einen Backofen mit der Dampfverteilungseinrichtung,
- Fig. 2: die an einer Garraumwandung befestigte Dampfverteilungseinrichtung in vergrößerten Maßstab und
- Fig. 3: den Anschluß der Dampfverteilungseinrichtung an ein am Boden des Garraums abgestelltes Gargefäß.

Eine Wandung 1 eines Backofens begrenzt einen Garraum 2. In diesen ist ein Backblech 3 horizontal eingeschoben. Darauf ist Gargut 5, 5' abgelegt. An der Garraumdecke ist eine Dampfverteilungseinrichtung 7 verschwenk- und teleskopartig verschiebbar befestigt. In unterbrochenen Linien ist die verschwenkte und auf das Gargut 5 verschobene Verdampfungseinrichtung 7' gezeigt. Die dampfdichte Dampfverteilungseinrichtung 7, 7' wird mit Dampf von einer außerhalb des Garraums 2 angeordneten Verdampfungseinrichtung (nicht gezeigt) gespeist und der Dampf wird aus einer Austrittsöffnung 9 dem Gargut 5 zugeführt.

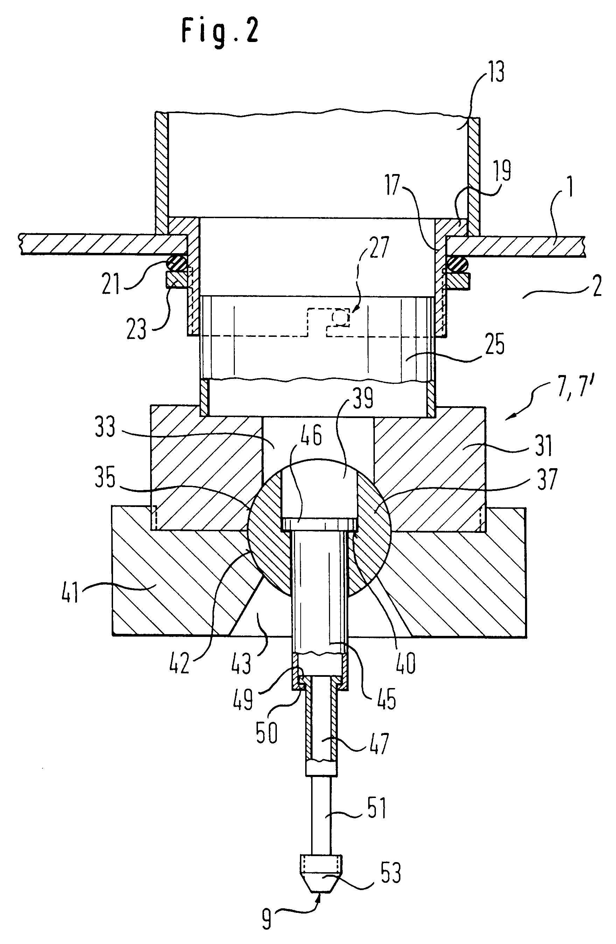

In Fig. 2 ist die im Garraum 2 an der Garraumwand 1 befestigte Dampfverteilungseinrichtung 7, 7' stark vergrößert gezeigt. Der Dampfverteilungseinrichtung 7, 7' wird der von der nicht gezeigten Verdampfungseinrichtung erzeugte Dampf über ein Dampfeinleitrohr 13 zugeführt. Die Dampfverteilungseinrichtung 7, 7' ist ein mehrteiliges Gebilde und besteht im wesentlichen aus einem Anschlußrohr 17, einem Zwischenrohr 25, einer oberen Kugellagerungshälfte 31, einer Dampfkanalkugel 37, einer unteren Kugellagerungshälfte 41, verschiedenen Schieberohren 45, 47, 51 und einer Düse 53.

Das Anschlußrohr 17 liegt mit seiner ringförmigen Schulter 19 an der Garraumwandung 1 auf und ist mittels einer ringförmigen Dichtung 21 und einer Befestigungsmutter 23 an der Decken-Wandung 1, sich vertikal in den Garraum 2 erstreckend, befestigt. Das Dampfeinleitrohr 13 ist mit der Schulter 19 des Anschlußrohrs 17 verlötet. Das Zwischenrohr 25 ist über einen Bajonettverschluß 27 an Anschlußrohr 17 abnehmbar befestigt. Im unteren Bereich des Zwischenrohrs 25 ist die obere Kugellagerungshälfte 31 an dieses gelötet. Die obere Kugellagerungshälfte weist eine vertikale Durchgangsbohrung 33 mit einer sphärischen Ringschulter 35 auf, deren freier Innendurchmesser von oben nach unten zunimmt. Im unteren Bereich der obere Kugellagerungshälfte 31 ist an deren Umfang die untere Kugellagerungshälfte 41 angeschraubt. Diese weist in ihrem oberen Bereich eine zweite sphärische Ringschulter 42 auf, die zusammen mit der ersten sphärischen Ringschulter 35 der oberen Kugellagerungshälfte 31 einen im wesentlichen hohlkugelförmigen Aufnahmeraum bilden. Im Anschluß an die zweite sphärische Ringschulter 35 erstreckt sich in der unteren Kugellagerungshälfte 41 eine sich konisch erweiternde Bohrung 43 in vertikaler Richtung. Die bisher beschriebenen Elemente der Dampfverteilungseinrichtung 7, 7' sind nicht verschwenkbar oder verschiebbar an der Garraumwandung 1 befestigt.

Im durch die erste und zweite sphärische Ringschulter 35, 42 gebildeten Aufnahmeraum findet die mit einer kreisförmigen Durchgangsöffnung 39 versehene Dampfkanalkugel 37 Platz. Dabei ist die Dampfkanalkugel 37 drehbar gelagert. Der Durchmesser der Durchgangsöffnung 39 ist abgestuft, so daß diese in ihrem mittleren Bereich eine eine kreisförmige Auflagefläche bildende Stufe 40 aufweist. In die Durchgangsöffnung 39 ist ein erstes Schieberohr 45 aus Kupfer mit einer Schieberohr-Ringschulter 46 eingeschoben. Die Außendurchmesser des ersten Schieberohrs 45 und der Schieberohr-Ringschulter 46 sind jeweils nur wenig kleiner als die beiden Innendurchmesser der Durchgangsöffnung 39. So ist das erste Schieberohr 45 innerhalb der Dampfkanalkugel 37 verschiebbar, wobei das erste Schieberohr 45 jede eingenommene Position aufgrund der zwischen der Innenwandung der Durchgangsöffnung 39 und der Außenwandung des ersten Schieberohrs 45 auftretenden Reibung hält. Im ersten Schieberohr ist ein zweites Schieberohr 47 aus Kupfer mit einem im Vergleich zum ersten Schieberohr kleineren Durchmesser eingeschoben. Auch das zweite Schieberohr 47 weist in seinem oberen Bereich einen Schieberohrflansch 49 auf, der im Zusammenwirken mit einem Anschlag 50 des ersten Schieberohrs 45 ein Abziehen des zweiten Schieberohrs 47 aus dem ersten Schieberohr 45 verhindert. Das zweite Schieberohr 47 ist in dem ersten Schieberohr 45, wie oben beschrieben, derart geführt, daß es in jeder Position innerhalb des ersten Schieberohrs 45 aufgrund der auftretenden Reibung verbleibt. Entsprechend ist in dem zweiten Schieberohr 47 ein drittes Schieberohr 51 aus Kupfer angeordnet. Auf dieses ist am unteren Ende eine Düse 53 mit der Dampfaustrittsöffnung 9 aufgeschraubt.

Der von der Verdampfungseinrichtung (nicht gezeigt) erzeugte Dampf strömt also durch das Dampfeinleitrohr 13 zum Anschlußrohr 17 über das Zwischenrohr 25 durch die Durchgangsbohrung 33 der oberen Kugellagerungshälfte 31 in die Durchgangsöffnung 39 der Dampfkanalkugel 37 und von dort durch die hintereinander angeordneten Schieberohre 45, 47, 51 zur Düse 53 und tritt aus dieser durch die Dampfaustrittsöffnung 9 aus. Die Verschieberohre 45, 47, 51 bilden eine bezüglich der vom Dampf zurückzulegenden Wegstrecke veränderbare Dampfleitung entsprechend einer Teleskopstange, die zusätzlich mit Hilfe der Dampfkanalkugel 37 in dem von der konisch erweiternde Bohrung 43 vorgegebenen Bereich verschwenkbar ist.

Gemäß Fig. 3 ist in dem Garraum 2 auf einem Garraumboden 61 ein verschließbares Gargefäß 63 zum Dampfgaren abgestellt. Dieses umfaßt ein eigentliches Garbehältnis 65, das mit einem Deckel 67 verschließbar ist. Im oberen Bereich des Deckels 67 weist dieser eine Dampföffnung 69 auf, an die mittels eines rohrförmigen Verbindungsstücks 71 das dritte Schieberohr 51 der Dampfverteilungseinrichtung 7, 7' aufgeschraubt ist.

## Patentansprüche

1. Backofen mit einer Verdampfungseinrichtung zum Dampfgaren eines Gargutes (5, 5') in einem Garraum (2,) wobei die Verdampfungseinrichtung wenigstens im Garraum (2) angeordnete, mit wenigstens einer Dampfaustrittsöffnung (9) versehene Dampfverteilungseinrichtung (7, 7') speist, die den Dampf dem im Garraum abgestellten Gargut (5, 5') zuführt und die mit der Dampfaustrittsöffnung (9) zum Gargut (5) bewegbar ist, **dadurch gekennzeichnet**, daß die Dampfverteilungseinrichtung (7,7') mit der Dampfaustrittsöffnung (9) verschwenkbar und/oder teleskopartig verschiebbar ist.

2. Backofen nach Anspruch 1, **dadurch gekennzeichnet**, daß die Dampfverteilungseinrichtung (7, 7') im oberen Bereich des Garraums (2) befestigt ist.

3. Backofen nach einem der vorhergehenden Ansprüche, **dadurch gekennzeichnet**, daß die Dampfverteilungseinrichtung (7, 7') eine Schnellkupplung (27) zur lösbaren Befestigung an einem dem Garraum (2) Dampf zuführenden Dampfeinleitrohr (13) aufweist.

4. Backofen nach einem der vorhergehenden Ansprüche, **dadurch gekennzeichnet**, daß auf die Dampfaustrittsöffnung (9) unterschiedliche, das Ausströmverhalten des Dampfes verändernde Strömungselemente (53) aufsetzbar sind.

5. Backofen nach einem der vorhergehenden Ansprüche, **dadurch gekennzeichnet**, daß an die Dampfaustrittsöffnung (9) über ein Verbindungsstück (71) ein im Garraum (2) abgestelltes, verschließbares Gargefäß (63) ankoppelbar ist.

## Claims

1. Baking oven with an evaporating device for steam cooking of a stock (5, 5'), which is to be cooked, in a cooking chamber (2), wherein the evaporating device feeds at least one steam distributing device (7, 7'), which is arranged in the cooking chamber (2), is provided with at least one steam outlet opening (9), feeds the steam to the cooking stock (5, 5') placed in the cooking chamber and is movable together with the steam outlet opening (9) relative to the cooking stock (5), characterised in that the steam distributing device (7, 7') together with the steam outlet opening (9) is pivotable and/or telescopically displaceable.

2. Baking oven according to claim 1, characterised in that the steam distributing device (7, 7') is fastened in the upper region of the cooking chamber (2).

3. Baking oven according to one of the preceding claims, characterised in that the steam distributing device (7, 7') has a quick coupling device (27) for detachable fastening to a steam inlet pipe (13) feeding steam to the cooking chamber (2).

4. Baking oven according to one of the preceding claims, characterised in that different flow elements (53) varying the outflow behaviour of the steam are locatable on the steam outlet opening (9).

5. Baking oven according to one of the preceding claims, characterised in that a closable cooking vessel (63), which can be coupled to the steam outlet opening (9) by way of a connecting member (71), is placed in the cooking chamber (2).

## Revendications

1. Four de cuisson muni d'un dispositif de vaporisation pour cuire à la vapeur un produit à cuire (5, 5') dans une chambre de cuisson (2), dans lequel le dispositif de vaporisation alimente au moins un dispositif de distribution de vapeur (7, 7'), agencé dans la chambre de cuisson (2) et muni d'au moins une ouverture de sortie de vapeur (9), qui conduit la vapeur au produit à cuire (5, 5') placé dans la chambre de cuisson et qui peut être déplacé avec l'ouverture de sortie de vapeur (9) vers le produit à cuire (5), caractérisé en ce que le dispositif de distribution de vapeur (7, 7'), avec son ouverture de sortie de vapeur (9), peut se déplacer en mouvement d'oscillation et/ou de translation télescopique.

2. Four de cuisson selon la revendication 1, caractérisé en ce que le dispositif de distribution de vapeur (7, 7') est fixé dans la région supérieure de la chambre de cuisson (2).

3. Four de cuisson selon une des revendications précédentes, caractérisé en ce que le dispositif de distribution de vapeur (7, 7') présente un raccord rapide (27) pour pouvoir être fixé de façon démontable à un tube d'introduction de vapeur (13) qui amène la vapeur à la chambre de cuisson (2).

4. Four de cuisson selon une des revendications précédentes, caractérisé en ce que différents éléments d'écoulement (53), qui modifient le comportement d'échappement de la vapeur peuvent être montés sur l'ouverture de sortie de vapeur (9).

5. Four de cuisson selon une des revendications précédentes, caractérisé en ce qu'un récipient de cuisson (63) pouvant être fermé, placé dans la chambre de cuisson (2), peut être raccordé à l'ouverture de sortie de vapeur (9) par l'intermédiaire d'un élément de raccordement (71).
